# EUROPEAN PATENT APPLICATION

(11) **EP 4 830 664 A1**
(43) Date of publication of application: **28.10.2026**
(21) Application number: 25176949.3
(22) Date of filing: 16.05.2025
(51) Int. Cl.: A61C 17/22

(54) **ELECTRIC TOOTHBRUSH REPLACEMENT HEAD**

(30) Priority: 25.04.2025 CN 202520802109 U
(71) Applicant: Tang, Mingying, Maoming, Guangdong 525243 (CN)
(72) Inventor: Tang, Mingying, Maoming, Guangdong 525243 (CN)
(74) Representative: Metida

(57) **Abstract**

The present invention discloses an electric toothbrush and a replacement head thereof. The replacement head of the electric toothbrush includes a brush body. An upper part is provided with a bristle member, and a lower portion is defined with an assembly cavity. A coupling member is received in the assembly cavity. The coupling member includes a sidewall and a top wall, the sidewall and the top wall are enclosed to form a receptacle configured to receive a motion transmission shaft of the electric toothbrush. The sidewall includes an elastic portion extending along an axial direction of the assembly cavity. An arc recession is provided on the elastic portion. An edge of the arc recession at least partially abuts against the inner wall of the assembly cavity. The replacement head of the electric toothbrush has a stable structure and improves the use effect of the electric toothbrush.

## Description

### TECHNICAL FIELD

The present invention relates to the technical field of electric toothbrushes, and in particular, to a novel electric toothbrush and a replacement head thereof.

### BACKGROUND

An electric toothbrush, as a personal care device in the field of oral hygiene, is increasingly favored by consumers. An electric toothbrush typically features a removable and replaceable attachment brush, also known as "replacement head". When it is time to replace them after a period of use, only the toothbrush head needs to be changed, allowing the main body of the electric toothbrush to continue being used.

When using the electric toothbrush, the protruding drive shaft of the handle is inserted into the tubular connector of the replacement head. The high-speed rotating drive shaft moves the replacement head to clean the mouth. The efficiency, portability, and excellent cleaning effect of the electric toothbrushes leads to their widespread use.

However, the internal structure of the existing electric toothbrush heads is unstable, resulting in poor performance of the electric toothbrush.

### SUMMARY

The present invention aims to provide an electronic toothbrush and a replacement head with structural stability for improving the performance of the electronic toothbrush.

In order to achieve the above aim, the present invention provides an electric toothbrush replacement head, including: a brush body, an upper portion of the brush body arranged with a bristle member and a lower portion of the brush body defined with an assembly cavity; a coupling member received in the assembly cavity, the coupling member comprising a sidewall and a top wall, the sidewall and the top wall of the coupling member surrounding a receptacle configured to accommodate a motion transmission shaft of an electric toothbrush, the sidewall of the coupling member comprising an elastic portion extending along an axial direction of the assembly cavity, the sidewall of the coupling member comprising a first sidewall facing the receptacle and a second sidewall facing away from the receptacle; the elastic portion being defined with an arc recession, the arc recession being formed by the second sidewall of the elastic portion being recessed toward the first sidewall of the elastic portion, and an edge of the arc recession at least partially abutting against an inner wall of the assembly cavity.

In some embodiments, the sidewall of the coupling member is defined with an opening, two ends of the elastic portion are correspondingly connected to two opposing sidewalls of the opening, and the two ends of the elastic portion extends along the axial direction of the assembly cavity.

In some embodiments, the opening is coated with a soft glue.

In some embodiments, a length of the elastic portion along the axial direction of the assembly cavity is L1, a length of the arc recession along the axial direction of the assembly cavity is L2, a maximum depth of the arc recession is H, a range of L1 is 5mm-10mm, a range of L2 is 3mm-8mm, and a range of H is 0.3mm-1.6mm.

In some embodiments, an inner bottom wall of the arc recession is defined with an indentation, and the indentation is filled with an elastic material.

In some embodiments, the edge of the arc recession is arranged with a transition portion, and the transition portion extends from the arc recession to the sidewall of the coupling member.

In some embodiments, a protrusion extending toward the inner wall of the assembly cavity is further provided on the second sidewall of the elastic portion, at least one side of the arc recession is arranged with the protrusion, and the protrusion abuts against the inner wall of the assembly cavity to concentrate a force between the inner wall of the assembly cavity and the elastic portion on the protrusion.

In some embodiments, the protrusion includes a first protrusion and a second protrusion, the first protrusion is arranged on one side of the arc recession, the one side of the arc recession is proximal to a top wall of the coupling member, the second protrusion is arranged on another side of the arc recession, the other side of the arc recession is away from the top wall of the coupling member, and a distance between an outer side of the first protrusion and an axis of the receptacle is smaller than a distance between an outer side of the second protrusion and the axis of the receptacle.

In some embodiments, the first sidewall of the elastic portion is provided with a serrated engagement portion configured to engage with an outer surface of the motion transmission shaft.

In some embodiments, the coupling member further includes at least one first mounting portion arranged around a periphery of the sidewall of the coupling member, and the inner sidewall of the assembly cavity is provided with at least one second mounting portion to be engaged with the at least one first mounting portion; and/or, the coupling member further includes a profiled protrusion arranged on the top wall, and the profiled protrusion abuts against the inner wall of the assembly cavity.

In some embodiments, the coupling member further includes a positioning rib protruded from an outer side of the sidewall of the coupling member, and an inner side of the assembly cavity is provided with a positioning slot to be engaged with the positioning rib, and the positioning rib is arranged on a side opposite to the elastic portion; and/or, the coupling member includes a supporting rib extending outwards from the outer side of the sidewall of the coupling member, and the supporting rib is arranged on a lower portion of the coupling member.

In some embodiments, a bottom of the coupling member is further provided with a base, and the base is arranged within the assembly cavity; or the base is arranged outside the assembly cavity, and a top surface of the base abuts against a bottom surface of the assembly cavity.

The present invention also provides an electric toothbrush including a main body and a brush head; a motion transmission shaft protrudes from an upper end of the main body; the brush head is described in any of the above aspects; the motion transmission shaft is accommodated in the coupling member of the brush head and configured to drive the brush head to move.

The beneficial effects of the present invention are as follows: when inserting the motion transmission shaft into the coupling member, an outer wall of the motion transmission shaft exerts a force on the elastic portion, leading to an edge of the arc recession to be tightly fitted with the assembly cavity. An inner wall of the assembly cavity exerts a returning force to the elastic portion, thereby realizing a squeezing on the motion transmission shaft. The mutual squeezing between the coupling member and the motion transmission shaft stabilizes the motion transmission shaft on the brush head, thereby enhancing the performance of the electronic toothbrush.

### BRIEF DESCRIPTION OF THE DRAWINGS

In order to more clearly illustrate the embodiments of the present invention or the technical solutions in the prior art, the following will briefly introduce the drawings required for the embodiments or the prior art descriptions. Obviously, the drawings described below are only some embodiments of the present invention. For a person of ordinary skill in the art, other drawings can be obtained based on the structures shown in these drawings without creative work.
FIG. 1 is a schematic structural view of an electric toothbrush according to some embodiments of the present invention.
FIG. 2 is an exploded view of an electric toothbrush replacement head according to some embodiments of the present invention.
FIG. 3 is a sectional view of an electric toothbrush replacement head according to some embodiments of the present invention.
FIG. 4 is a perspective view of a coupling member of an electric toothbrush replacement head of according to some embodiments of the present invention.
FIG. 5 is a sectional view of a coupling member of an electric toothbrush replacement head according to some embodiments of the present invention.
FIG. 6 is a perspective view of a coupling member of an electric toothbrush replacement head according to some embodiments of the present invention.
FIG. 7 is a perspective view of a coupling member of an electric toothbrush replacement head according to some embodiments of the present invention.
FIG. 8 is a perspective view of the coupling member at another angle in FIG. 4.
FIG. 9 is a cut-away view of an electric toothbrush replacement head according to some embodiments of the present invention.
FIG. 10 is an exploded view of an electric toothbrush replacement head according to some embodiments of the present invention.
FIG. 11 is a sectional view of an electric toothbrush replacement head according to some embodiments of the present invention.

In order to facilitate the display of the toothbrush replacement head, some of the structures in the accompanying drawings are enlarged.

Reference characters: Brush head-100; Brush body-10; Assembly cavity 101; Bristle member-11; Positioning slot-12; Second mounting portion-13; Coupling member-20; Receptacle-201; Limiting surface-2011; Sidewall-21; Top wall-22; Elastic portion-23; Arc recession-231; Indentation-2311; Transition portion-233; Serrated engagement portion-234; First sidewall -235; Second sidewall-236; Protrusion-237; First protrusion-237a; Second protrusion-237b; Opening-24; Soft glue block-241; Elongated hole-2411; Protrusion-242; Positioning rib-25; Support rib-26; Profiled protrusion-27; First mounting portion-28; Base-29; Main body-300; Motion transmission shaft-301; Flat surface-3011.

The realization of the purpose, functional features and advantages of the present invention will be further explained in combination with the embodiments and with reference to the accompanying drawings.

### DETAILED WAY

The following will be combined with the accompanying drawings to clearly and completely describe the technical solutions in the embodiments of the present invention. Obviously, the described embodiments are only part but not all of the embodiments. Based on the embodiments in the present invention, all other embodiments obtained by a person of ordinary skill in the art without creative work are within the scope of protection of the present invention.

It should be noted that all directional indications in the embodiments of the present invention (such as up, down, left, right, front, back...) are only configured to explain the relative position relationship, movement, etc. between the components under a certain posture (as shown in the drawings). If the specific posture changes, the directional indication will also change accordingly.

In the present invention, unless otherwise clearly specified and defined, the terms "connection", "fixation", etc. should be understood in a broad sense. For example, "fixation" can be a fixed connection, a detachable connection, or an integral connection; it can be a mechanical connection or an electrical connection; it can be directly connected or indirectly connected through an intermediate medium, it can be the internal connection of two elements or the interaction relationship between two elements, unless otherwise clearly defined. For a person of ordinary skill in the art, the specific meanings of the above terms in the present invention can be understood according to the specific circumstances.

In addition, the descriptions of "first", "second", etc. in the embodiments of the present invention are only for descriptive purposes and cannot be understood as indicating or implying their relative importance or implicitly indicating the number of technical features. Therefore, the features defined as "first" and "second" can explicitly or implicitly include at least one of the features. In addition, the meaning of "and/or" appearing in the full text includes three parallel schemes. Taking "A and/or B" as an example, it includes scheme A, or scheme B, or scheme A and B. In addition, the technical solutions between the various embodiments can be combined with each other, but they must be based on a person of ordinary skill in the art. When the combination of technical solutions is contradictory or cannot be implemented, it should be considered that such a combination of technical solutions does not exist and is not within the scope of protection required by the present invention.

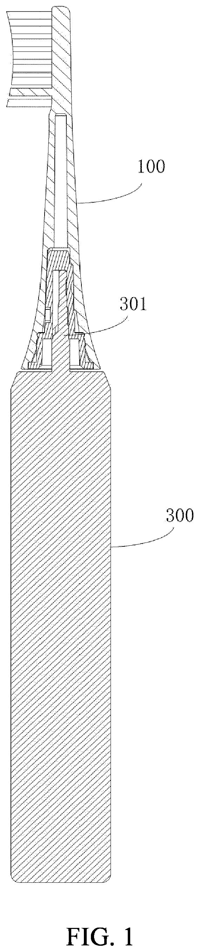

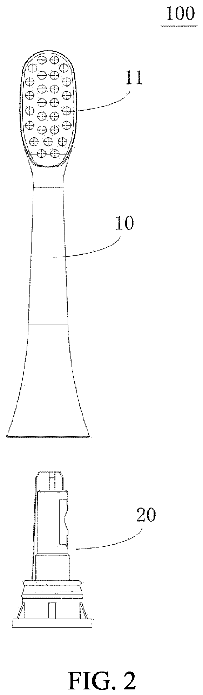

The present invention proposes an electric toothbrush, and in particular, proposes a replacement head for an electric toothbrush. As illustrated in FIG. 1 and FIG. 2, the electric toothbrush includes a brush head 100, a main body 300, and a motor component, a control circuit, and a power supply, etc. disposed in the main body 300 (not shown in the drawings). The brush head 100 is detachably connected to the main body 300, thereby convenient for replacement. A motion transmission shaft 301 protrudes from one end of the main body 300, the motion transmission shaft 301 is inserted into the brush head 100, and the brush head 100 is installed on the main body 300. When the motor component is in operation, the motion transmission shaft 301 transmits motion to the brush head 100, driving the brush head 100 to rotate or vibrate to optimize oral hygiene of a user through enhanced cleaning efficacy.

As illustrated in FIG. 1, FIG. 2, FIG. 3, FIG. 4 and FIG. 5, according to some embodiments of the present invention, the replacement head of the electric toothbrush, that is, the aforementioned brush head 100, includes a brush body 10 and a coupling member 20 inserted into a lower portion of the brush body 10. The coupling member 20 is configured as a connecting piece for receiving the motion transmission shaft 301 of the main body 300, so as to achieve the connection between the main body 300 and the brush head 100.

The brush body 10 is tubular, including a first end and a second end. The first end is provided with a bristle member 11, which is configured to clean the oral cavity of a user. The second end of the brush body 10 is provided with an opening, and the opening extends in a direction towards the first end to form an assembly cavity 101. The coupling member 20 is inserted into the assembly cavity 101 and is embedded within the assembly cavity 101.

The coupling member 20 is a columnar structure, including a sidewall 21 and a top wall 22. The sidewall 21 matches with an inner wall of the assembly cavity 101 to allow the coupling member 20 to be better accommodated in the assembly cavity 101. The sidewall 21 and the top wall 22 surround a receptacle 201, and the receptacle 201 is configured to accommodate the motion transmission shaft 301 of the electric toothbrush. The sidewall 21 includes an elastic portion 23. The elastic portion 23 extends along an axial direction of the assembly cavity 101. The elastic portion 23 includes a first sidewall 235 facing the receptacle 201 and a second sidewall 236 facing away from the receptacle 201. The elastic portion 23 is defined with an arc recession 231. A portion of the second sidewall 236 of the elastic portion 23 is recessed toward the first sidewall 235 of the elastic portion 23, forming the arc recession 231. An edge of the arc recession 231 at least partially abuts against the inner wall of the assembly cavity 101.

The motion transmission shaft 301 is configured to be inserted into the coupling member 20 along the sidewall 21 of the coupling member 20. An outer wall of the motion transmission shaft 301, when touching an inner wall of the elastic portion 23, will raise the elastic portion 23 outward, thereby elastically deforming the arc recession 231. Thus, an inner surface of the arc recession 231 is tightly coupled with the inner wall of the assembly cavity 101. The inner wall of the assembly cavity 101 forms a returning force on the elastic portion 23, allowing the elastic portion 23 to squeeze the motion transmission shaft 301. Through the mutual engagement between the coupling member 20 and the motion transmission shaft 301, the motion transmission shaft 301 can be stably coupled to the brush body 10, thereby enhancing the performance of the electric toothbrush.

As illustrated in FIG. 1, FIG. 3 and FIG. 9, a free end of the motion transmission shaft 301 has two opposing side surfaces. One of the two opposing side surfaces is a flat surface 3011, and the other one of the two opposing side surfaces is also a flat surface. An inner wall of the receptacle 202 of the coupling member 20 has a limiting surface 2011 extending along a longitudinal direction of the receptacle 202. The limiting surface 2011 is configured to abut against the flat surface 3011 of the motion transmission shaft 301 to limit the rotational movement of the motion transmission shaft 301 in the coupling member 20. In addition, the limiting surface 2011 and the elastic portion 23 are respectively positioned on two opposing side surfaces of the motion transmission shaft 301, ensuring that the force exerted by the elastic portion 23 on the motion transmission shaft 301 is perpendicular to the limiting surface 2011. Therefore, the flat surface 3011 of the motion transmission shaft 301 fit more tightly against the limiting surface 2011.

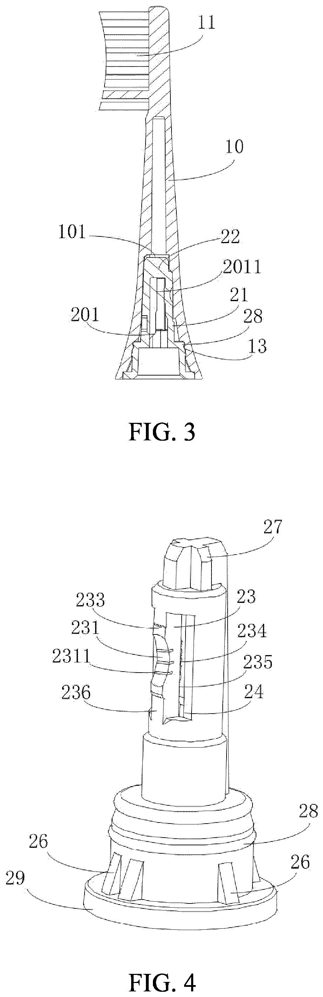

In some embodiments, as illustrated in FIG. 4, the sidewall 21 of the brush body is defined with an opening 24. Two axially extending ends of the elastic portion 23 are connected to two opposing sidewalls of the opening 24. The opening 24 is not only convenient for the molding of the elastic portion 23, but also facilitates the deformation of the elastic portion 23.

In some embodiments, as illustrated in FIG. 4, a bottom wall of the arc recession 231 is defined with an indentation 2311, and the indentation 2311 is filled with elastic material. Such a design makes the elastic portion 23 filled with elastic material have better elastic force, which not only improves the stability of the connection between the elastic portion 23 and the motion transmission shaft, but also prolongs the service life of the coupling member 20.

In some embodiments, as illustrated in FIG. 3 and FIG. 4, an edge of at least one end of the arc recession 231 is connected with a transition part 233, and the transition part 233 extends from the arc recession 231 toward the sidewall of the coupling member 20. When the elastic portion 23 is deformed, the transition part 233 abuts against the inner wall of the assembly cavity 101. Compared with abutment on the edge of the arc recession 231, the contact area is increased, thereby increasing the returning force of the inner wall of the assembly cavity 101, improving the stability of the connection between the elastic portion 23 and the motion transmission shaft, and extending the service life of the coupling member 20. In some embodiments, the transition part 233 is defined with an inclined surface, leading to that the edge of the arc recession 231 flare outward, thereby improving the deformation of the elastic portion 23.

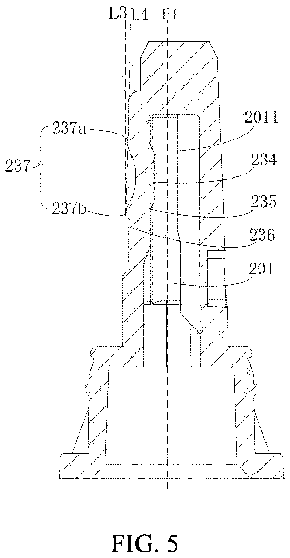

In some embodiments, as illustrated in FIG. 5, the second sidewall 236 of the elastic portion 23 also includes a protrusion 237 extending along the second sidewall of the elastic portion toward the inner wall of the assembly cavity 101. At least one side of the arc recession 231 is arranged with the protrusion 237. The protrusion 237 abuts against the inner wall of the assembly cavity 101, thereby concentrating the force between the inner wall of the assembly cavity 101 and the elastic portion 23 on the protrusion 237.

In some embodiments, the protrusion 237 includes a first protrusion 237a and a second protrusion 237b. The first protrusion 237a is arranged on one side proximal to the top wall of the coupling member 20 of the arc recession 231, and the second protrusion 237b is arranged on another side away from the top wall of the coupling member 20 of the arc recession 231. A distance between an outer side of the first protrusion 237a and an axis P1 of the receptacle 201 is smaller than a distance between an outer side of the second protrusion 237b and the axis P1 of the receptacle 201. As shown in FIG. 5, two reference lines are extended from the second protrusion 237b as a starting point, the reference line L3 is parallel to the axis P1 of the receptacle 201, and the reference line L4 connects the outer side of the second protrusion 237b and the outer side of the first protrusion 237a, allowing an outer wall of the first protrusion 237a and an outer wall of the second protrusion 237b together to form an inclined surface. Correspondingly, the inner wall of the assembly cavity 101 is provided with an inclined inner wall matching the above-mentioned inclined surface. When the brush body 10 is assembled with the coupling member 20, the engagement between the inclined surface and the inclined inner wall facilitates the tight coupling among the first protrusion 237a, the second protrusion 237b and the assembly cavity 101. In addition, the engagement between the inclined surface and the inclined inner wall facilitates the assembly between the coupling member 20 and the brush body 10.

In some embodiments, as illustrated in FIG. 5, the inner wall of the elastic portion 23 is provided with a serrated engagement portion 234 adapted to the outer surface of the motion transmission shaft. The serrated engagement portion 234 is provided to be compatible with a main body featuring a strip-shaped transverse groove on the outer wall of the motion transmission shaft. When the brush head with the serrated engagement portion 234 is mounted onto the main body with a transverse groove on the outer wall of the motion transmission shaft, the serrated engagement portion 234 interlocks with the transverse groove on the motion transmission shaft of the main body, thereby ensuring a stabilized connection between the brush head and the motion transmission shaft of the main body.

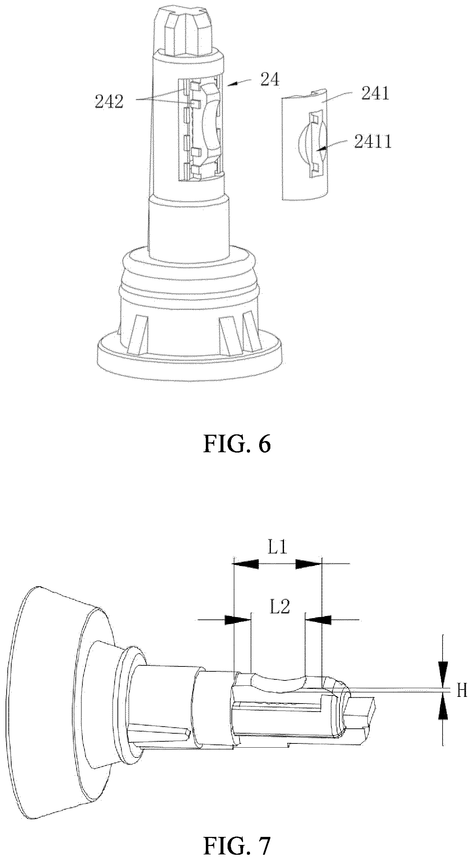

In some embodiments, as illustrated in FIG. 6, the opening 24 is coated with soft glue. After the coupling member 20 is formed by injection molding, the coupling member 20 is subjected to secondary injection molding to form a soft glue block 241, and the soft glue block 241 is defined with an elongated hole 2411 to engage with the elastic portion 23. The peripheral void surrounding the elastic portion 23 is occupied by the soft glue block 241, ensuring the structural continuity of the outer wall of the coupling member 20 and making a stabilized connection between the coupling member 20 and the brush body 10. Furthermore, the sidewall of the opening 24 and/or both sides of the elastic portion 23 is/are also provided with a convex block 242, which enhances the contact area between the opening 24 and the soft glue block 241, increases the frictional resistance, and thus improves the connection stability of the opening 24 and the soft glue block 241.

In some embodiments, as illustrated in FIG. 7, a length of the elastic portion 23 along the axial direction of the assembly cavity 101 is L1, a length of the arc recession 231 along the axial direction of the assembly cavity 101 is L2, and a maximum depth of the arc recession 231 is H. A range of L1 is 5mm-10mm, a range of L2 is 3mm-8mm, and a range of H is 0.3mm-1.6mm. Parameters L1, L2 and H can be adjusted based on actual applications. For example, L1 is 6mm, L2 is 4mm, and H is 0.7mm; for another example, L1 is 8mm, L2 is 6mm, and H is 1.2mm.

In some embodiments, as illustrated in FIG. 3 and FIG. 4, the coupling member 20 also includes a profiled protrusion 27 arranged on its top wall, such as a cross-shaped structure shown in FIG. 3. The profiled protrusion 27 abuts against the inner wall of the assembly cavity. The profiled protrusion 27 designed in this way significantly mitigates the adverse effects caused by thermal expansion and contraction during manufacturing. In the manufacturing process, the cylindrical solid structure exhibit higher difficulty in achieving precise fit tolerances with the cavity wall. During cooling, the workpiece experiences pronounced deformation, and the deformation magnitude may affect the engagement between the workpieces. In addition, the extended cooling durations of the solid structure amplifies the deformation magnitude variations greatly. In some embodiments, the profiled structure is defined with a plurality of notches, reducing material thickness of each portion. In addition, it is easy to dissipate heat, the cooling time is shorter, and the deformation magnitude variations are reduced. Therefore, the manufacturing process for achieving a tight engagement between the outer wall of the coupling member with a profiled structure and the inner wall of the assembly cavity of the brush body is relatively easier.

In some embodiments, as illustrated in FIG. 4, the coupling member 20 also includes at least one first mounting portion 28 arranged on a periphery of the sidewall, and an inner side of the assembly cavity 101 is provided with a second mounting portion 13 that engages with the first mounting portion 28. The first mounting portion 28 and the second mounting portion 13 may be configured as: one as an annular depression and the other as an annular ridge; or one as a ridge or a depression, and the other as a corresponding depression or a corresponding ridge.

In some embodiments, the coupling member 20 also includes a support rib 26, which protrudes from the outside of the sidewall. The support rib 26 is arranged at a lower portion of the coupling member 20. A plurality of support ribs 26 can be provided to strengthen the overall strength of the coupling member 20.

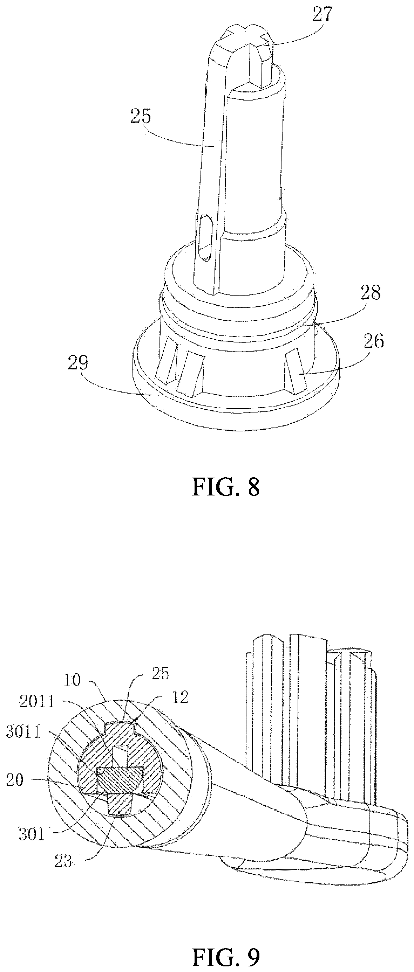

In some embodiments, as illustrated in FIG. 8 and FIG. 9, the coupling member 20 also includes a positioning ledge 25, which extends outward from the outside of the sidewall. The inner side of the assembly cavity 101 is defined with a positioning slot 12 that engages with the positioning ledge 25. The positioning ledge 25 is arranged on a side opposite to the elastic portion 23. The positioning ledge 25 ensures precise alignment of the coupling member 20 during installation onto the brush body 10.

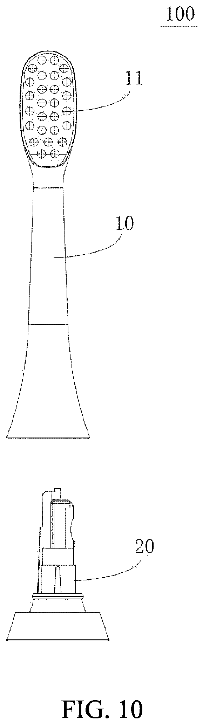

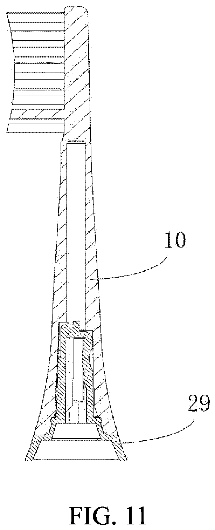

In some embodiments, as illustrated in FIG. 3 and FIG. 4, a base 29 is also provided at a bottom of the coupling member 20, and the base 29 is arranged on the inner side of the assembly cavity 101. In some embodiments, as illustrated in FIG. 10 and FIG. 11, the base 29 is arranged outside the assembly cavity 101, and an upper side of the base 29 abuts against a bottom surface of the assembly cavity 101.

The above description only illustrates some embodiments of the present invention, and does not limit the protection scope of the present invention. All equivalent structural changes made by using the contents of the present invention specification and drawings under the concept of the present invention, or directly/indirectly used in other related technical fields are included in the protection scope of the present invention.

## Claims

1. An electric toothbrush replacement head (100), **characterized by** comprising:
a brush body (10), an upper portion of the brush body (10) arranged with a bristle member (11) and a lower portion of the brush body (10) defined with an assembly cavity (101);
a coupling member (20) received in the assembly cavity (101), the coupling member (20) comprising a sidewall (21) and a top wall (22), the sidewall (21) and the top wall (22) of the coupling member (20) surrounding a receptacle (201) configured to accommodate a motion transmission shaft (301) of an electric toothbrush, the sidewall (21) of the coupling member (20) comprising an elastic portion (23) extending along an axial direction of the assembly cavity (101), the sidewall (21) of the coupling member (20) comprising a first sidewall (235) facing the receptacle (201) and a second sidewall (236) facing away from the receptacle (201); the elastic portion (23) being defined with an arc recession (231), the arc recession (231) being defined by a portion of the second sidewall (236) of the elastic portion (23), the portion of the second sidewall (236) being recessed toward the first sidewall (235) of the elastic portion (23), and an edge of the arc recession (231) at least partially abutting against an inner wall of the assembly cavity (101).

2. The electric toothbrush replacement head (100) according to claim 1, wherein the sidewall (21) of the coupling member (20) is defined with an opening (24), two ends of the elastic portion (23) are correspondingly connected to two opposing sidewalls of the opening (24), and the two ends of the elastic portion (23) extends along the axial direction of the assembly cavity (101).

3. The electric toothbrush replacement head (100) according to claim 2, wherein the opening (24) is coated with a soft glue.

4. The electric toothbrush replacement head (100) according to any one of claims 1-3, wherein a length of the elastic portion (23) along the axial direction of the assembly cavity (101) is L1, a length of the arc recession (231) along the axial direction of the assembly cavity (101) is L2, a maximum depth of the arc recession (231) is H, a range of L1 is 5mm-10mm, a range of L2 is 3mm-8mm, and a range of H is 0.3mm-1.6mm.

5. The electric toothbrush replacement head (100) according to any one of claims 1-4, wherein an inner bottom wall of the arc recession (231) is defined with an indentation (2311), and the indentation (2311) is filled with an elastic material.

6. The electric toothbrush replacement head (100) according to any one of claims 1-5, wherein the edge of the arc recession (231) is arranged with a transition portion (233), and the transition portion (233) extends from the arc recession (231) to the sidewall (21) of the coupling member (20).

7. The electric toothbrush replacement head (100) according to any one of claims 1-6, wherein a protrusion (237) extending toward the inner wall of the assembly cavity (231) is further provided on the second sidewall (236) of the elastic portion (23), at least one side of the arc recession (231) is arranged with the protrusion (237), and the protrusion (237) abuts against the inner wall of the assembly cavity (101) to concentrate a force between the inner wall of the assembly cavity (101) and the elastic portion (23) on the protrusion (237).

8. The electric toothbrush replacement head (100) according to claim 7, wherein the protrusion (237) comprises a first protrusion (237a) and a second protrusion (237b), the first protrusion (237a) is arranged on one side of the arc recession (101), the one side of the arc recession (101) is proximal to the top wall (22) of the coupling member (20), the second protrusion (237b) is arranged on another side of the arc recession, the other side of the arc recession is away from the top wall (22) of the coupling member (20), and a distance between an outer side of the first protrusion (237a) and an axis of the receptacle (26) is smaller than a distance between an outer side of the second protrusion (237b) and the axis of the receptacle (26).

9. The electric toothbrush replacement head (100) according to any one of claims 1-8, wherein the first sidewall (21) of the elastic portion (23) is provided with a serrated engagement portion (234) configured to engage with an outer surface of the motion transmission shaft (301).

10. The electric toothbrush replacement head (100) according to any one of claims 1-9, wherein the coupling member (20) further comprises at least one first mounting portion (28) arranged around a periphery of the sidewall (21) of the coupling member (20), and the inner sidewall of the assembly cavity (101) is provided with at least one second mounting portion (13) to be engaged with the at least one first mounting portion (28); and/or, the coupling member (20) further comprises a profiled protrusion (27) arranged on the top wall (22), and the profiled protrusion (27) abuts against the inner wall of the assembly cavity (101).

11. The electric toothbrush replacement head (100) according to claim 10, wherein the coupling member (20) further comprises a positioning rib (25) protruded from an outer side of the sidewall (21) of the coupling member (20), and an inner side of the assembly cavity (101) is provided with a positioning slot (12) for engaging with the positioning rib (25), and the positioning rib (25) is arranged on a side opposite to the elastic portion (23); and/or, the coupling member (20) comprises a supporting rib (26) extending outwards from the outer side of the sidewall (21) of the coupling member (20), and the supporting rib (26) is arranged on a lower portion of the coupling member (20).

12. The electric toothbrush replacement head (100) according to any one of claims 1-11, wherein a bottom of the coupling member (20) is further provided with a base (29), and the base (29) is arranged within the assembly cavity (101); or
the base (29) is arranged outside the assembly cavity (101), and a top surface of the base (29) abuts against a bottom surface of the assembly cavity (101).

13. An electric toothbrush, **characterized in that** the electric toothbrush comprises a main body (300) and a brush head (100); a motion transmission shaft (301) protrudes from an upper end of the main body (300); the brush head (100) is the electric toothbrush replacement head described in any one of claims 1 to 12; the motion transmission shaft (20) is accommodated in the coupling member (20) of the brush head (100) and configured to drive the brush head (100) to move.

## Amended claims

### Amended claims in accordance with Rule 137(2) EPC.

1. An electric toothbrush replacement head (100), **characterized by** comprising:
a brush body (10), an upper portion of the brush body (10) arranged with a bristle member (11) and a lower portion of the brush body (10) defined with an assembly cavity (101);
a coupling member (20) received in the assembly cavity (101), the coupling member (20) comprising a sidewall (21) and a top wall (22), the sidewall (21) and the top wall (22) of the coupling member (20) surrounding a receptacle (201) configured to accommodate a motion transmission shaft (301) of an electric toothbrush, the sidewall (21) of the coupling member (20) comprising an elastic portion (23) extending along an axial direction of the assembly cavity (101), the elastic portion (23) comprising a first sidewall (235) facing the receptacle (201) and a second sidewall (236) facing away from the receptacle (201); the elastic portion (23) being defined with an arc recession (231), the arc recession (231) being defined by a portion of the second sidewall (236) of the elastic portion (23), the portion of the second sidewall (236) being recessed toward the first sidewall (235) of the elastic portion (23), and an edge of the arc recession (231) at least partially abutting against an inner wall of the assembly cavity (101), wherein the sidewall (21) of the coupling member (20) is defined with an opening (24), two ends of the elastic portion (23) are correspondingly connected to two opposing sidewalls of the opening (24), and the two ends of the elastic portion (23) extend along the axial direction of the assembly cavity (101).

2. The electric toothbrush replacement head (100) according to claim 1, wherein the opening (24) is provided with a soft glue block (241), wherein the soft glue block (241) is defined with an elongated hole (2411) configured to engage with the elastic portion (23), and a peripheral void surrounding the elastic portion (23) is occupied by the soft glue block (241).

3. The electric toothbrush replacement head (100) according to any one of claims 1-2, wherein a length of the elastic portion (23) along the axial direction of the assembly cavity (101) is L1, a length of the arc recession (231) along the axial direction of the assembly cavity (101) is L2, a maximum depth of the arc recession (231) is H, a range of L1 is 5mm-10mm, a range of L2 is 3mm-8mm, and a range of H is 0.3mm-1.6mm.

4. The electric toothbrush replacement head (100) according to any one of claims 1-3, wherein a bottom wall of the arc recession (231) is defined with an indentation (2311), and the indentation (2311) is filled with an elastic material.

5. The electric toothbrush replacement head (100) according to any one of claims 1-4, wherein the edge of the arc recession (231) is arranged with a transition portion (233), and the transition portion (233) extends from the arc recession (231) to the sidewall (21) of the coupling member (20).

6. The electric toothbrush replacement head (100) according to any one of claims 1-5, wherein a protrusion (237) extending toward the inner wall of the assembly cavity (101) is further provided on the second sidewall (236) of the elastic portion (23), at least one side of the arc recession (231) is arranged with the protrusion (237), and the protrusion (237) abuts against the inner wall of the assembly cavity (101) to concentrate a force between the inner wall of the assembly cavity (101) and the elastic portion (23) on the protrusion (237).

7. The electric toothbrush replacement head (100) according to claim 6, wherein the protrusion (237) comprises a first protrusion (237a) and a second protrusion (237b), the first protrusion (237a) is arranged on one side of the arc recession (231), the one side of the arc recession (231) is proximal to the top wall (22) of the coupling member (20), the second protrusion (237b) is arranged on another side of the arc recession, the other side of the arc recession is away from the top wall (22) of the coupling member (20), and a distance between an outer side of the first protrusion (237a) and an axis of the receptacle (201) is smaller than a distance between an outer side of the second protrusion (237b) and the axis of the receptacle (201).

8. The electric toothbrush replacement head (100) according to any one of claims 1-7, wherein the first sidewall (235) of the elastic portion (23) is provided with a serrated engagement portion (234) configured to engage with an outer surface of the motion transmission shaft (301).

9. The electric toothbrush replacement head (100) according to any one of claims 1-8, wherein the coupling member (20) further comprises at least one first mounting portion (28) arranged around a periphery of the sidewall (235) of the coupling member (20), and the inner sidewall of the assembly cavity (101) is provided with at least one second mounting portion (13) to be engaged with the at least one first mounting portion (28); and/or, the coupling member (20) further comprises a profiled protrusion (27) arranged on the top wall (22), and the profiled protrusion (27) abuts against the inner wall of the assembly cavity (101).

10. The electric toothbrush replacement head (100) according to claim 9, wherein the coupling member (20) further comprises a positioning rib (25) protruded from an outer side of the sidewall (21) of the coupling member (20), and an inner side of the assembly cavity (101) is provided with a positioning slot (12) for engaging with the positioning rib (25), and the positioning rib (25) is arranged on a side opposite to the elastic portion (23); and/or, the coupling member (20) comprises a supporting rib (26) extending outwards from the outer side of the sidewall (21) of the coupling member (20), and the supporting rib (26) is arranged on a lower portion of the coupling member (20).

11. The electric toothbrush replacement head (100) according to any one of claims 1-10, wherein a bottom of the coupling member (20) is further provided with a base (29), and the base (29) is arranged within the assembly cavity (101); or
the base (29) is arranged outside the assembly cavity (101), and a top surface of the base (29) abuts against a bottom surface of the assembly cavity (101).

12. An electric toothbrush, **characterized in that** the electric toothbrush comprises a main body (300) and a brush head (100); a motion transmission shaft (301) protrudes from an upper end of the main body (300); the brush head (100) is the electric toothbrush replacement head described in any one of claims 1 to 11; the motion transmission shaft (301) is accommodated in the coupling member (20) of the brush head (100) and configured to drive the brush head (100) to move.
